# NEUE EUROPÄISCHE PATENTSCHRIFT

(11) **EP 2 956 341 B2**
(45) Veröffentlichungstag und Bekanntmachung des Hinweises auf die Entscheidung über den Einspruch: **12.08.2020**
(45) Hinweis auf die Patenterteilung: 30.11.2016
(21) Anmeldenummer: 14703843.4
(22) Anmeldetag: 11.02.2014
(51) Int. Cl.: B60T 17/00

(54) **LUFTVERSORGUNGSANLAGE MIT ELEKTRONISCHEM UMRICHTER**
AIR SUPPLY SYSTEM WITH ELECTRONIC CONVERTER
APPAREIL D'APPORT D'AIR COMPRENANT UN CONVERTISSEUR ÉLECTRONIQUE

(30) Priorität: 14.02.2013 DE 102013101502
(43) Veröffentlichungstag der Anmeldung: 23.12.2015
(73) Patentinhaber: KNORR-BREMSE Systeme für Schienenfahrzeuge GmbH, 80809 München (DE)
(72) Erfinder: HARTL, Michael, 82008 Unterhaching (DE); LINNER, Martin, 84419 Schwindegg (DE); ASSMANN, Gert, 80337 München (DE); MERKEL, Thomas, 50354 Hürth (DE)
(74) Vertreter: Maiwald Patent- und Rechtsanwaltsgesellschaft mbH
(86) Internationale Anmeldenummer: PCT/EP2014/052599
(87) Internationale Veröffentlichungsnummer: WO 2014/124920

(56) Entgegenhaltungen:
- EP-A1- 2 388 172
- EP-A1- 2 388 172
- EP-A2- 0 872 342
- EP-B1- 1 993 893
- EP-B1- 2 553 537
- EP-B2- 0 976 635
- EP-B2- 0 976 635
- CN-A- 102 588 259
- DE-A1-102007 056 318
- DE-A1-102009 052 510
- DE-A1-102010 020 266
- DE-A1-102010 020 266
- US-A1- 2006 275 143
- US-A1- 2009 254 246
- "Interne Kompressor- Steuerung Sigma Control", KAESER KOMPRESSOREN, 2004,

## Beschreibung

### GEBIET DER ERFINDUNG

Die vorliegende Erfindung betrifft eine Luftversorgungsanlage umfassend einen von einem Motor angetriebenen Kompressor zur Erzeugung von Druckluft, einer Lufttrockneranlage zum Entfeuchten der erzeugten Druckluft, einen elektronischen Umrichter zur bedarfsabhängigen Kompressorsteuerung und mehrere analoge und/oder digitale Sensoren zur Generierung von elektrischen Signalen.

Das Einsatzgebiet der Erfindung erstreckt sich auf Schienenfahrzeuge, deren Druckluftversorgungssystem in erster Linie für die Bereitstellung eines Bremsdrucks für die Fahrzeugbremsen dient.

### HINTERGRUND DER ERFINDUNG

Aus dem allgemein bekannten Stand der Technik geht hervor, dass Kompressorantriebe für Luftversorgungsanlagen in Schienenfahrzeugen von sogenannten Hilfsbetriebeumrichtern gespeist werden. Dabei sorgt ein Eingangsumrichter für die Anpassung der Eingangsspannung und eine Vielzahl von Ausgangsumrichtern nehmen die Anpassung an die verschiedenen Verbraucher vor. Durch den Hilfsbetriebeumrichter wird nicht nur die Luftversorgungsanlage bedient, sondern auch weitere Geräte wie zum Beispiel Gerätelüfter und Klimaanlagen.

Gesonderte Umrichter die den Antrieb des Kompressors der Luftversorgungsanlage speisen, sind insbesondere in Schienenfahrzeugen eine Ausnahme. Sofern Diagnoeinrichtungen für den Kompressor zum Einsatz kommen, werden diese als zusätzliche Steuergeräte unabhängig vom Umrichter ausgeführt. Darüber hinaus sind, insbesondere für den Bahnbetrieb ausgelegte Umrichter groß in ihrer Abmessung und beanspruchen dadurch viel Bauraum bei meist hohem Gewicht. Eine Tendenz die sich in der Antriebstechnik im zunehmenden Maße durchsetzt ist, dass jeder Verbraucher seinen eigenen Umrichter erhält. Dadurch entstehen neue Möglichkeiten der Steuerung, wobei durch zusätzliche im Umrichter integrierte Elektronik die Gerätediagnose und Signalverarbeitung über den Umrichter realisiert werden kann.

Aus der DE 10 2009 050 720 A1 geht eine Kompressoreinrichtung eines Schienenfahrzeuges hervor, wobei die Steuervorrichtung mit der Kompressoreinrichtung verbindbar ist. Ein erstes Erfassungsmittel ist zum Erfassen zur Verfügung stehender rückgewonnener Bremsenergie vorgesehen. Ferner ist ein Steuermittel zum Aktivieren der Kompressoreinrichtung in Abhängigkeit von der vom ersten Erfassungsmittel erfassten Bremsenergie vorgesehen. Das Steuermittel ist derart konfiguriert, dass es die Kompressoreinrichtung aktiviert, sobald das erste Erfassungsmittel eine vorgebbare Größe an zur Verfügung stehender Bremsenergie erfasst. Darüber hinaus ist ein zweites Erfassungsmittel zum Erfassen des Druckes in einem Druckluftleitungssystem des Schienenfahrzeuges vorgesehen. Die Aufgabe der Steuervorrichtung besteht darin für eine Kompressoreinrichtung eines Schienenfahrzeuges eine Reduktion des Energieverbrauchs zu erreichen.

Die DE 10 2010 020 266 A1 offenbart eine Druckluftversorgungsanlage mit einem Kompressor zur Erzeugung von Druckluft, einer Lufttrockneranlage zum Entfeuchten der erzeugten Druckluft und Sensoren zur Generierung von elektrischen Signalen. Die Anlage wird durch ein Bremssteuergerät, das zwei sich gegenseitig überwachende Mikroprozessoren enthält, zwischen Last-, Regenerierungs- und Entlastungsphase umgeschaltet.

### OFFENBARUNG DER ERFINDUNG

Es ist daher die Aufgabe der vorliegenden Erfindung eine Luftversorgungsanlage eines Schienenfahrzeuges zur Verfügung zu stellen, die die Drehzahl des Kompressors bedarfsabhängig steuert, aber auch Signale der Diagnose des Kompressors verarbeitet.

Erfindungsgemäß sind die elektrischen Signale zur Steuerung des elektronischen Umrichters und zur Überwachung und Steuerung des Kompressors nutzbar, wobei in dem elektronischen Umrichter eine Verarbeitung der von den Sensoren generierten elektrischen Signale zu Bussignalen erfolgt, welche zur Auswertung an einer Busschnittstelle bereitstellbar sind. Vorzugsweise verarbeitet der elektronische Umrichter die elektrischen Signale zu einem CAN-Bussignal. Es können gesonderte Steuergeräte zur elektronischen Überwachung des Kompressors und des Motors eingespart werden. Darüber hinaus wird die Möglichkeit geschaffen, Diagnosesignale der Kompressorsteuerung intelligent mit anderen Diagnose- und Steuersignalen des Umrichters zu koppeln, weiterzuverarbeiten und vorteilhafte Betriebszustände durch Kommunikation unter den Steuergeräten für den Kompressor und/oder die Luftversorgungsanlage herzustellen.

Die Erfindung schließt die technische Lehre ein, dass der elektronische Umrichter ein Frequenzumrichter mit einer speicherprogrammierbaren Steuerung ist. Über die integrierte speicherprogrammierbare Steuerung wird ein benutzerdefiniertes Steuerprogramm in den elektronischen Umrichter implementiert. Dieses Programm liest die Signale an Analog- und Digitaleingängen ein, verarbeitet sie weiter und regelt je nach Programmierung die Ausgangsfrequenz. Der elektronische Umrichter verfügt vorzugsweise über acht analoge Eingänge zur Verarbeitung der Sensorsignale für die Überwachung des Kompressors.

Gemäß einem bevorzugten Ausführungsbeispiel ist die Steuerbefehle umfassende Software zur Erkennung von Grenzwerten und Erzeugung von Warnsignalen in einem zentralen Bremssteuergerät hinterlegt. In einer bevorzugten Variante wird eine Masterfunktion direkt von dem zentralen Bremssteuergerät ausgeführt. Auf diese Weise entfällt die Entwicklung einer kompressorspezifischen Auswertehardware. Ein Grenzwerterkennung berechnendes und Warnsignale erzeugendes Programm mit einer Auswertesoftware wird vorzugsweise in einem Bus-Master hinterlegt.

Gemäß einem weiteren bevorzugten Ausführungsbeispiel ist eine Steuerbefehle umfassende Software zur Erkennung von Grenzwerten und Erzeugung von Warnsignalen in der speicherprogrammierbaren Steuerung des elektronischen Umrichters implementiert. Der Vorteil der Ausführung mit Umrichter ist eine Entlastung der Rechenleistung eines Masters (BSG), da dieser nur noch die Signale weiterleitet und eine Berechnung somit entfällt.

Vorzugsweise ist der Kompressor ein zweistufiger ölfreier oder ölgeschmierter Kolbenkompressor. Ein einstufiger ölfreier oder ölgeschmierter Kolbenverdichter ist ebenfalls denkbar. Die Überwachung des Kompressors besteht bei zweistufigen ölfreien Kolbenkompressoren aus Sensoren, die insbesondere mindestens eine Zylinderwandtemperatur, eine Kühllufttemperatur, eine Ansaugtemperatur, sowie Drücke, wie einen Enddruck, einen Zwischendruck und einen Unterdruck an den Ansaugfilter überwachen. Bei ölgeschmierten Kompressoren hingegen ist es zusätzlich sinnvoll insbesondere eine Öltemperatur und eine Luftaustrittstemperatur zu überwachen.

Des Weiteren bevorzugt ist, dass der Kompressor ein Rotationsverdichter ist. Der Kompressor ist vorzugsweise ein einstufiger Schraubenkompressor.

Gemäß einer die Erfindung weiter verbessernden Maßnahme wird vorgeschlagen, dass der elektronische Umrichter direkt an dem Motor befestigt ist. Dadurch lässt sich eine kompakte Bauart realisieren.

Gemäß einem bevorzugten Ausführungsbeispiel sind der Motor und der Kompressor in einer metallischen Kapsel angeordnet, wobei zwischen der metallischen Kapsel und dem elektronischen Umrichter angeordnete und somit außerhalb der metallischen Kapsel verlaufende Sensorleitungen über eine Schirmung zur Abschirmung gegen elektromagnetische Störungen verfügen. Ein elektronischer Umrichter erzeugt bauartbedingt elektromagnetische Störungen. Diese können in den Sensorleitungen der Diagnosesignale zu Störungen führen und falsche Signale hervorrufen. Die geschirmten Sensorleitungen werden an der metallischen Kapsel vorzugsweise mittels Stecker befestigt. Innerhalb der metallischen Kapsel werden die Kabel ungeschirmt weitergeführt, da die Kapsel selbst als Schirmung dient. Abhängig von dem vorhandenen Bauraum ist es auch denkbar, den Umrichter innerhalb der Kapsel unterzubringen.

Vorzugsweise bestehen die Sensorleitungen aus Einzellitzen mit Schirmung. Aus der metallischen Kapsel werden Sensorsignale geschirmt zum Umrichter geführt. Bei Verwendung eines mehradrigen geschirmten Kabels kann der Schirm nicht bis an die Steckerleisten im elektronischen Umrichter geführt werden. Es erweist sich als besonders vorteilhaft, jedes einzelne Sensorsignal über ein Kabel vorzugsweise durch Sammelverschraubungen an einem Gehäuse des elektronischen Umrichters zu führen.

Des Weiteren bevorzugt ist, dass der Motor ein Drehstrommotor ist. Drehstrommotoren weisen im Vergleich zu Gleichstrommotoren eine geringere Baugröße und somit eine höhere Leistungsdichte auf. Außerdem arbeiten Drehstrommotoren verschleißfrei, da ein Bürstenverschleiß entfällt. Darüber hinaus weisen Elektromotoren im Betrieb geringere Schallemissionen auf.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig. 1: ein vereinfachtes Blockschaltbild einer erfindungsgemäßen Lufttrocknungsanlage mit einer metallischen Kapsel, und
- Fig.2: ein vereinfachtes Blockschaltbild einer erfindungsgemäßen Lufttrocknungsanlage mit einem an einem Motor angeordnetem elektronischen Umrichter.

### DETAILLIERTE BESCHREIBUNG EINER BEVORZUGTEN AUSFÜHRUNGSFORM

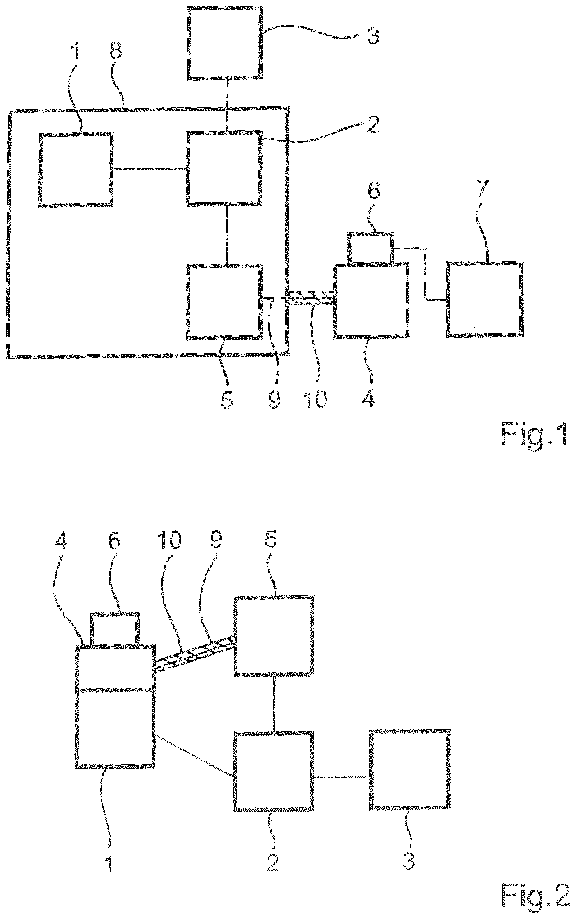

Gemäß Fig. 1 weist eine erfindungsgemäße Luftversorgungsanlage eine von einem Motor 1 betriebenen Kompressor 2 auf. Dem Kompressor 2 ist eine Lufttrockneranlage 3 zum Entfeuchten der erzeugten Druckluft zugeordnet. Der Motor 1 ist ein Drehstrommotor und der Kompressor 2 ist ein einstufiger Schraubenkompressor. Die Lufttrockneranlage 3 arbeitet nach dem Adsorptionstrocknungsprinzip. Ferner sind dem Kompressor 2 verschiedene analoge und digitale Sensoren 5 zugeordnet, die verschiedene Informationen aufnehmen und über eine Sensorleitung 9 in den elektronischen Umrichter 4 speisen. Der Motor 1 sowie der Kompressor 2 und die Sensoren 5 sind innerhalb einer metallischen Kapsel 8 angeordnet. Die zwischen Sensoren 5 und elektronischen Umrichter 4 angeordnete Sensorleitung 9 weist zwischen metallischer Kapsel 8 und elektronischen Umrichter 4 eine Schirmung 10 auf. Die von den Sensoren 5 generierten elektrischen Signale werden zur Steuerung des elektronischen Umrichters 4 und Überwachung des Kompressors 2 genutzt. In dem elektronischen Umrichter 4 erfolgt eine Verarbeitung der von den Sensoren 5 generierten elektrischen Signale zu Bussignalen. Diese Bussignale werden zur Auswertung an einer Busschnittstelle 6 bereitgestellt. In einem zentralen Bremssteuergerät 7 ist die Steuerbefehle umfassende Software zur Erkennung von Grenzwerten und Erzeugung von Warnsignalen hinterlegt.

In Fig. 2 ist eine weitere erfindungsgemäße Lufttrocknungsanlage dargestellt, wobei der elektronische Umrichter 4 direkt an dem Motor 1 befestigt ist. Der Motor treibt den Kompressor 2 zur Erzeugung von Druckluft an. Die Lufttrockneranlage 3 hat die Aufgabe die erzeugte Druckluft zu entfeuchten. Im Gegensatz zu Fig. 1 ist die Steuerbefehle umfassende Software zur Erkennung von Grenzwerten und Erzeugung von Warnsignalen in der speicherprogrammierbaren Steuerung des elektronischen Umrichters 4 implementiert. Die elektrische Verbindung zwischen Sensoren 5 und elektronischen Umrichter 4 erfolgt über die Schirmung 10 aufweisende Sensorleitung 9.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, die Sensorleitung 9 aus mehreren Einzellitzen auszubilden, die sofern erforderlich eine Schirmung 10 aufweisen. Ferner kann der Kompressor ein zweistufiger ölfreier oder ölgeschmierter Kolbenkompressor sein.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Motor
- 2: Kompressor
- 3: Lufttrockneranlage
- 4: elektronischer Umrichter
- 5: Sensor
- 6: Busschnittstelle
- 7: Bremssteuergerät
- 8: metallische Kapsel
- 9: Sensorleitung
- 10: Schirmung

## Patentansprüche

1. Schienenfahrzeug mit einem Druckluftversorgungssystem für die Bereitstellung eines Bremsdrucks für Fahrzeugbremsen mit einer Luftversorgungsanlage, umfassend einen von einem Motor (1) angetriebenen Kompressor (2) zur Erzeugung von Druckluft, einer Lufttrockneranlage (3) zum Entfeuchten der erzeugten Druckluft, einen elektronischen Umrichter (4) zur bedarfsabhängigen Kompressorsteuerung und mehrere analoge und/oder digitale Sensoren (5) zur Generierung von elektrischen Signalen,
**dadurch gekennzeichnet, dass** die elektrischen Signale zur Steuerung des elektronischen Umrichters (4) und zur Überwachung und Steuerung des Kompressors (2) nutzbar sind und in dem elektronischen Umrichter (4) eine Verarbeitung der von den Sensoren (5) generierten elektrischen Signale zu Bussignalen erfolgt, welche zur Auswertung an einer Busschnittstelle (6) bereitstellbar sind.

2. Schienenfahrzeug nach Anspruch 1,
**dadurch gekennzeichnet, dass** der elektronische Umrichter (4) ein Frequenzumrichter mit einer speicherprogrammierbaren Steuerung ist.

3. Schienenfahrzeug nach Anspruch 1 oder 2,
**dadurch gekennzeichnet, dass** eine Steuerbefehle umfassende Software zur Erkennung von Grenzwerten und Erzeugung von Warnsignalen in der speicherprogrammierbaren Steuerung des elektronischen Umrichters (4) implementiert ist.

4. Schienenfahrzeug nach Anspruch 1,
**dadurch gekennzeichnet, dass** die Steuerbefehle umfassende Software zur Erkennung von Grenzwerten und Erzeugung von Warnsignalen in einem zentralen Bremssteuergerät (7) hinterlegt ist.

5. Schienenfahrzeug nach Anspruch 1,
**dadurch gekennzeichnet, dass** der Kompressor (2) ein zweistufiger ölfreier oder ölgeschmierter Kolbenkompressor ist.

6. Schienenfahrzeug nach Anspruch 1,
**dadurch gekennzeichnet, dass** der Kompressor (2) ein Rotationsverdichter ist.

7. Schienenfahrzeug nach Anspruch 1,
**dadurch gekennzeichnet, dass** der elektronische Umrichter (4) direkt an dem Motor (1) befestigt ist.

8. Schienenfahrzeug nach Anspruch 1,
**dadurch gekennzeichnet, dass** der Motor (1) und der Kompressor (2) in einer metallischen Kapsel (8) angeordnet sind, wobei zwischen der metallischen Kapsel (8) und dem elektronischen Umrichter (4) angeordnete und somit außerhalb der metallischen Kapsel (8) verlaufende Sensorleitungen (9) über eine Schirmung (10) zur Abschirmung gegen elektromagnetische Störungen verfügen.

9. Schienenfahrzeug nach Anspruch 8,
**dadurch gekennzeichnet, dass** die Sensorleitungen (9) aus Einzellitzen mit Schirmung bestehen.

10. Schienenfahrzeug nach Anspruch 1,
**dadurch gekennzeichnet, dass** der Motor (1) ein Drehstrommotor ist.

## Claims

1. Rail vehicle with a compressed air supply system for the provision of a brake pressure for vehicle brakes with an air supply system, comprising a compressor (2) driven by a motor (1) for generating compressed air, an air drier system (3) for extracting moisture from the compressed air produced, an electronic converter (4) for demand-based compressor control and a plurality of analogue and/or digital sensors (5) for producing electrical signals,
**characterised in that** the electrical signals can be used for controlling the electronic converter (4) and for monitoring and controlling the compressor (2), and the processing of the electrical signals produced by the sensors (5) is carried out in the electronic converter (4) to form bus signals which can be provided for evaluation at a bus interface (6).

2. Rail vehicle according to claim 1,
**characterised in that** the electronic converter (4) is a frequency converter with a programmable logic controller.

3. Rail vehicle according to claim 1 or 2,
**characterised in that** software comprising control commands for detecting limit values and generating warning signals is implemented in the programmable logic controller of the electronic converter (4).

4. Rail vehicle according to claim 1,
**characterised in that** the software comprising control commands for detecting limit values and generating warning signals is stored in a central brake control unit (7).

5. Rail vehicle according to claim 1,
**characterised in that** the compressor (2) is a two-stage oil-free or oil-lubricated piston compressor.

6. Rail vehicle according to claim 1,
**characterised in that** the compressor (2) is a rotation compressor.

7. Rail vehicle according to claim 1,
**characterised in that** the electronic converter (4) is directly attached to the motor (1).

8. Rail vehicle according to claim 1,
**characterised in that** the motor (1) and the compressor (2) are arranged in a metallic capsule (8), wherein sensor lines (9) arranged between the metallic capsule (8) and the electronic converter (4) and thus extending outside of the metallic capsule (8) have screening (10) for shielding them against electromagnetic interference.

9. Rail vehicle according to claim 8,
**characterised in that** the sensor lines (9) consist of single strands with screening.

10. Rail vehicle according to claim 1,
**characterised in that** the motor (1) is a three-phase motor.

## Revendications

1. Véhicule ferroviaire comportant, pour la mise en œuvre d'une pression de freinage dans des freins de véhicule, un système d'alimentation en air comprimé comportant un compresseur (2) entraîné par un moteur (1) pour produire de l'air comprimé, un système (3) de sécheur d'air pour déshydrater l'air comprimé produit, un convertisseur (4) électronique pour commander le compresseur en fonction des besoins et plusieurs capteurs (5) analogiques et/ou numériques pour produire des signaux électriques,
**caractérisé en ce que** les signaux électriques peuvent être utilisés pour commander le convertisseur (4) électronique et pour contrôler et commander le compresseur (2) et il s'effectue, dans le convertisseur (4) électronique, une transformation des signaux électriques produits par les capteurs (5) en des signaux de bus, qui peuvent être mis à disposition pour l'exploitation sur une interface (6) de bus.

2. Véhicule ferroviaire suivant la revendication 1,
**caractérisé en ce que** le convertisseur (4) électronique est un convertisseur de fréquence ayant une commande à programme enregistré.

3. Véhicule ferroviaire suivant la revendication 1 ou 2,
**caractérisé en ce qu'**un logiciel comprenant des instructions de commande est mis en œuvre pour détecter des valeurs limites et pour produire des signaux d'alerte dans la commande à programme enregistré du convertisseur (4) électronique.

4. Véhicule ferroviaire suivant la revendication 1,
**caractérisé en ce que** le logiciel, comprenant des instructions de commande pour détecter des valeurs limites et produire des signaux d'alerte, est mémorisé dans un appareil (7) central de commande de frein.

5. Véhicule ferroviaire suivant la revendication 1,
**caractérisé en ce que** le compresseur (2) est un compresseur à piston à deux étages, sans huile ou lubrifié à l'huile.

6. Véhicule ferroviaire suivant la revendication 1,
**caractérisé en ce que** le compresseur (2) est un compresseur rotatif.

7. Véhicule ferroviaire suivant la revendication 1,
**caractérisé en ce que** le convertisseur (4) électronique est fixé directement sur le moteur (1).

8. Véhicule ferroviaire suivant la revendication 1,
**caractérisé en ce que** le moteur (1) et le compresseur (2) sont disposés dans une capsule (8) métallique, des lignes (9) de capteur disposées entre la capsule (8) métallique et le convertisseur (4) électronique et s'étendant ainsi à l'extérieur de la capsule (8) métallique, disposant d'un blindage (10) vis-à-vis de parasites électromagnétiques.

9. Véhicule ferroviaire suivant la revendication 8,
**caractérisé en ce que** les lignes (9) de capteur sont constituées de torons individuels à blindage.

10. Véhicule ferroviaire suivant la revendication 1,
**caractérisé en ce que** le moteur (1) est un moteur à courant triphasé.
